# FASCICULE DE BREVET EUROPEEN

(11) **EP 2 396 636 B1**
(45) Date de publication et mention de la délivrance du brevet: **23.01.2013**
(21) Numéro de dépôt: 10703271.6
(22) Date de dépôt: 11.02.2010
(51) Int. Cl.: G01L 1/14, G01L 1/18, G01L 1/22, G01L 5/16, G01M 17/02

(54) **CAPTEUR DE FORCE DE CONTACT**
KONTAKTKRAFTSENSOR
CONTACT FORCE SENSOR

(30) Priorité: 13.02.2009 FR 0950926
(43) Date de publication de la demande: 21.12.2011
(73) Titulaire: Commissariat à l'Énergie Atomique et aux Énergies Alternatives, 75015 Paris (FR)
(72) Inventeur: DELAPIERRE, Gilles, F-38180 Seyssins (FR); REY, Patrice, F-38430 St Jean De Moirans (FR)
(74) Mandataire: Ilgart, Jean-Christophe
(86) Numéro de dépôt international: PCT/EP2010/051670
(87) Numéro de publication internationale: WO 2010/092092

(56) Documents cités:
- EP-A- 1 275 949
- EP-A- 2 085 253
- EP-A1- 0 549 807
- EP-A2- 1 847 823
- WO-A-2008/059838
- DE-A1- 4 017 265
- FR-A- 2 885 409
- US-A1- 2005 081 645
- US-B1- 6 247 371

## Description

### DOMAINE TECHNIQUE

L'invention concerne un capteur de force de contact. L'invention s'applique par exemple pour réaliser une mesure ou un suivi d'une pression d'écriture, une simulation du toucher ou encore une mesure d'adhésion de pneus. L'invention concerne notamment un capteur triaxial de force de contact noyé dans un matériau élastomère, ou en contact avec un milieu élastomère sur lequel s'exerce la force à détecter et éventuellement à mesurer.

### ÉTAT DE LA TECHNIQUE ANTÉRIEURE

Afin de mesurer une force de contact appliquée sur une surface d'un matériau élastomère, par exemple la gomme d'un pneu, il est connu d'utiliser un capteur de force 10 tel que représenté sur la figure 1 et par exemple décrit dans le document EP 1 275 949 Al. Ce capteur de force 10 comporte une membrane déformable 12 munie en son centre d'une tige 14. La tige 14 est disposée au sein du matériau élastomère qui transmet ladite force de contact à la tige 14. Compte tenu de la déformation que subit le matériau élastomère par la force de contact appliquée à sa surface, la tige 14 est également soumise à cette force et déforme la membrane 12 du fait du couple et du déplacement induits au centre de la membrane 12 par la tige 14. La déformation de la membrane 12 par la tige 14 est mesurée par des moyens de transduction 16, tels que des jauges de contraintes piézorésistives ou des détecteurs à variation de capacité, disposés sur la membrane 12.

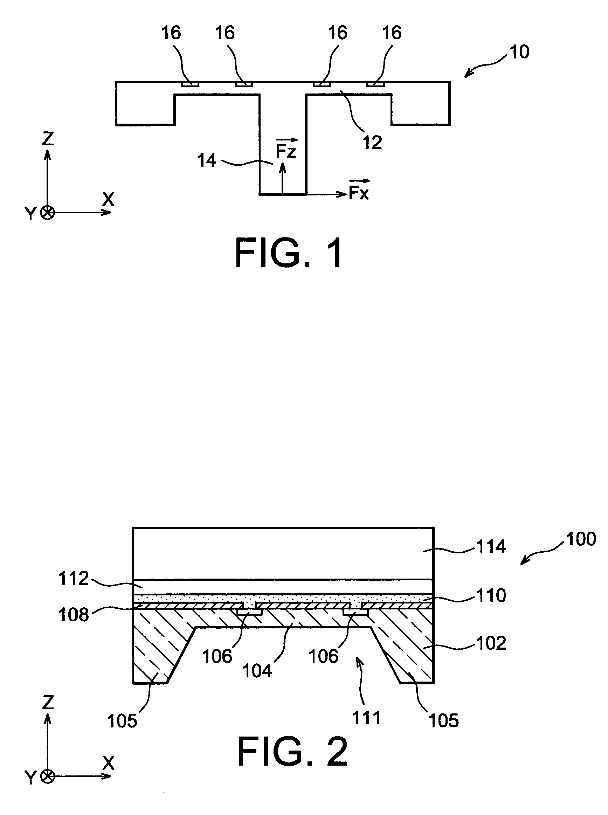

Ce capteur 10 permet donc de mesurer des forces appliquées sur la tige 14 par l'intermédiaire du matériau élastomère, ces forces pouvant être orientées perpendiculairement au plan de la membrane 12 comme par exemple la force Fz représentée sur la figure 1, ou orientées tangentiellement au plan de la membrane 12, c'est-à-dire orientées dans le plan de la membrane 12, comme par exemple la force Fx également représentée sur la figure 1.

Ce capteur 10 est par exemple réalisé en mettant en oeuvre des étapes de gravure chimique anisotrope dans toute l'épaisseur d'un substrat de silicium, formant ainsi la membrane 12 et la tige 14 au sein de ce substrat. Il est également possible de réaliser la membrane 12 et la tige 14 à partir de deux substrats distincts, puis de rapporter la tige 14 à la surface de la membrane 12.

Le document FR 2 885 409 Al décrit également un tel capteur de force, et qui comporte en outre des moyens d'ancrage formés à l'extrémité de la tige pour améliorer la transmission des efforts depuis le matériau élastomère à la tige.

De tels capteurs ont pour inconvénient majeur d'être complexes et coûteux à fabriquer, notamment lorsque les technologies de la microélectronique sont utilisées, compte tenu soit de la mise en oeuvre d'un grand nombre d'étapes nécessaires à la réalisation de ces capteurs, soit de la trop grande durée des étapes (cas de la gravure chimique anisotrope réalisée dans toute l'épaisseur d'un seul substrat pour former la membrane et la tige), soit de l'utilisation de plusieurs substrats (cas de la tige réalisée à partir d'un substrat différent de celui utilisé pour la réalisation de la membrane).

En outre le document WO 2008/059838 divulgue un capteur de force uniaxial sans tige dans lequel la transmission des efforts d'un élastomère à une membrane déformable munie d'un élément sensible est assurée par une couche adhérente qui s'étend sur l'ensemble de la surface de la membrane.

### EXPOSÉ DE L'INVENTION

Un but de la présente invention est de proposer un capteur de force qui soit moins coûteux à fabriquer tout en offrant une qualité de mesure sensiblement équivalente à celle des capteurs de force de l'art antérieur.

Pour cela, la présente invention propose un capteur triaxial de force comportant au moins :
- une membrane déformable,
- des moyens de détection d'une déformation de la membrane aptes à réaliser une détection triaxiale de la force à détecter, disposés sur une des faces principales de la membrane déformable (104, 208),
- des moyens d'adhérence disposés au moins sur ladite une des faces principales de la membrane déformable, aptes à rendre solidaire ladite une des faces principales de la membrane déformable à au moins un matériau élastomère destiné à être sollicité par la force à détecter, et répartis uniformément sur l'ensemble de la surface de ladite une des faces principales de la membrane déformable, la membrane déformable étant disposée entre une cavité et le matériau élastomère.

Un tel capteur permet de réaliser une liaison mécanique forte entre le matériau élastomère, ou matériau déformable, et la membrane déformable, sans faire appel à une tige destinée à transmettre les efforts à la membrane. Ainsi, ce capteur ne nécessite pas, pour sa réalisation, la mise en oeuvre d'étapes de durée importante ou d'un grand nombre d'étapes, ni l'utilisation de plusieurs substrats car le capteur selon l'invention ne nécessite pas de tige reliée à la membrane.

On entend par membrane déformable, ici et dans tout le reste du document, une membrane à base d'un matériau, par exemple du silicium, apte à se déformer sans hystérésis importante jusqu'à une élongation relative maximum (allongement maximum par rapport à la longueur initiale) par exemple de l'ordre de 2000.10⁻⁶ (ou 2000 microdéformations). De plus, lorsque la membrane est sensiblement plane, celle-ci comporte deux faces principales parallèles au plan de la membrane.

De plus, étant donné que la membrane est disposée entre une cavité et le matériau élastomère, cette membrane peut donc se déformer et suivre les déformations du matériau élastomère grâce au fait que la membrane se trouve en regard de la cavité qui autorise cette liberté de déformation de la membrane. Grâce à la cavité, la membrane peut donc subir n'importe quelle déformation dans l'espace, permettant au capteur de réaliser une détection triaxiale de force.

Les moyens d'adhérence peuvent être répartis uniformément sur ladite une des faces principales de la membrane déformable et/ou être répartis au niveau de l'ensemble de la surface de ladite une des faces principales de la membrane déformable. Ainsi, les moyens d'adhérence permettent de réaliser une répartition de la force appliquée au matériau élastomère sur l'ensemble de la membrane déformable, et donc de réaliser une détection de cette force quelque soit sa direction d'application.

Selon une première variante, les moyens d'adhérence peuvent comporter au moins une couche de colle destinée à être disposée entre ladite une des faces principales de la membrane déformable et le matériau élastomère.

Selon une seconde variante, les moyens d'adhérence peuvent comporter une pluralité de plots d'ancrage destinés à être disposés entre ladite une des faces principales de la membrane déformable et le matériau élastomère.

Ces deux variantes permettent de réaliser une adhésion solide entre la membrane et le matériau élastomère. La seconde variante permet toutefois d'améliorer encore l'adhérence entre la membrane déformable et le matériau élastomère.

Chaque plot d'ancrage peut avoir une section, dans un plan parallèle au plan passant par ladite une des faces principales de la membrane déformable, de dimensions comprises entre environ 100 nm et 10 µm. L'épaisseur d'un plot d'ancrage peut également être comprise entre environ 100 nm et 10 µm. Un espacement entre deux plots d'ancrage voisins peut également être compris entre environ 100 nm et 10 µm, et peut être choisi de préférence supérieur aux dimensions des plots d'ancrage dans un plan parallèle au plan passant par ladite une des faces principales de la membrane déformable. Les plots d'ancrage peuvent être à base de SiN et/ou de SiO₂ et/ou de silicium polycristallin.

De manière avantageuse, chaque plot d'ancrage peut comporter une base formée par une première portion de matériau et une partie supérieure formée par une seconde portion de matériau, la base pouvant être disposée entre ladite une des faces principales de la membrane et la partie supérieure et comporter une section, dans un plan parallèle à un plan passant par ladite une des faces principales de la membrane, de dimensions inférieures à celles d'une section, dans un plan parallèle au plan passant par ladite une des faces principales de la membrane, de la partie supérieure.

Les moyens de détection d'une déformation de la membrane peuvent comporter au moins une jauge de contraintes disposée sur ou dans au moins une partie de la membrane déformable. La jauge de contraintes peut être piézorésistive ou piézoélectrique.

Les moyens de détection d'une déformation de la membrane peuvent notamment comporter une pluralité de jauges de contraintes, par exemple disposées sur ou dans au moins une partie de la membrane déformable, et reliées électriquement entre elles en formant deux ponts de Wheatstone. Ces jauges de contraintes peuvent être piézorésistives ou piézoélectriques.

Dans une autre variante, les moyens de détection d'une déformation de la membrane peuvent comporter au moins trois premières électrodes de détection capacitive disposée contre ladite une des faces principales de la membrane et au moins une seconde électrode de détection capacitive solidaire d'une partie non déformable du capteur et disposée en regard de la membrane déformable.

Le nombre de premières électrodes peut être choisi en fonction des directions de déformation de la membrane à mesurer. Dans le cas où l'on souhaite réaliser une mesure selon plusieurs directions, le capteur peut donc comporter au moins trois premières électrodes. Ainsi, ces jeux d'électrodes, chacun formé par une première et une seconde électrode, permettent de former au moins trois capacités dont l'entrefer est variable avec la déformation de la membrane, la mesure de ces trois capacités permettant de connaître les trois composantes (selon trois axes d'un repère orthogonale) de la force à détecter.

La membrane déformable peut comporter une portion d'un substrat à base de semi-conducteur, ladite portion du substrat pouvant comporter par exemple une épaisseur comprise entre environ 0,1 µm et quelques centaines de micromètres (c'est-à-dire inférieure à environ 1 mm) ou entre environ 1 µm et 100 µm, ou une portion d'une couche active d'un substrat, par exemple de type SOI, disposée au-dessus de la cavité formée dans une sous-couche diélectrique du substrat par exemple d'épaisseur comprise entre environ 0,1 µm et 10 µm.

Le capteur de force peut comporter en outre une couche électriquement isolante disposée entre la membrane déformable et les moyens d'adhérence.

Le capteur de force peut comporter en outre des moyens de traitement d'informations issues des moyens de détection d'une déformation de la membrane, aptes à déterminer la direction et l'intensité de la force à détecter à partir des informations issues des moyens de détection.

La présente invention concerne également un procédé de réalisation d'un capteur triaxial de force, comportant au moins les étapes suivantes :
- réalisation d'une membrane déformable,
- réalisation de moyens de détection d'une déformation de la membrane aptes à réaliser une détection triaxial de la force à détecter, disposés sur une des faces principales de la membrane déformable (104, 208),
- réalisation de moyens d'adhérence sur au moins ladite une des faces principales de la membrane déformable répartis uniformément sur l'ensemble de la surface de ladite une des faces principales de la membrane déformable,
les moyens d'adhérence étant aptes à rendre solidaire ladite une des faces principales de la membrane déformable à au moins un matériau élastomère destiné à être sollicité par la force à détecter et la membrane déformable étant disposée entre une cavité et le matériau élastomère.

La réalisation de la membrane déformable peut comporter une étape d'usinage d'une portion d'un substrat à base de semi-conducteur, formant également la cavité.

Dans une variante, la réalisation de la membrane déformable peut comporter une étape de réalisation d'au moins une ouverture à travers au moins une couche active d'un substrat, par exemple de type SOI, et une étape de gravure d'une portion d'une sous-couche diélectrique du substrat à travers l'ouverture formant la cavité au-dessus de laquelle une portion de la couche active forme la membrane déformable.

La réalisation des moyens de détection d'une déformation de la membrane peut comporter une étape d'implantation de dopants dans la membrane, formant dans la membrane déformable au moins une jauge de contraintes piézorésistive, et/ou une pluralité de jauges de contraintes reliées électriquement entre elles en formant deux ponts de Wheatstone.

La réalisation des moyens de détection d'une déformation de la membrane peut comporter une étape de réalisation d'au moins trois premières électrodes de détection capacitive contre ladite une des faces principales de la membrane et une étape de réalisation d'au moins une seconde électrode de détection capacitive solidaire d'une partie non déformable du capteur en regard de la membrane déformable.

La réalisation des moyens d'adhérence peut comporter au moins une étape de dépôt d'une couche de colle sur ladite une des faces principales de la membrane déformable.

Dans une variante, la réalisation des moyens d'adhérence peut comporter au moins la réalisation d'une pluralité de plots d'ancrage.

Dans ce cas, la réalisation des plots d'ancrage peut être obtenue par la mise en oeuvre des étapes suivantes :
- dépôt d'une première couche sur ladite une des faces principales de la membrane déformable et d'une seconde couche sur la première couche, la première et la seconde couches étant chacune à base d'un matériau pouvant être gravé sélectivement l'un par rapport à l'autre ;
- gravure de la seconde couche, laissant subsister des portions de la seconde couche formant des parties supérieures des plots d'ancrage ;
- gravure de la première couche pendant une durée supérieure à celle de la précédente étape de gravure de la seconde couche, laissant subsister, sous les portions restantes de la seconde couche, des portions de la première couche formant chacune une base d'un plot d'ancrage.

Dans une autre variante, la réalisation des plots d'ancrage peut être obtenue par la mise en oeuvre des étapes suivantes :
- dépôt d'une couche sacrificielle sur ladite une des faces principales de la membrane déformable,
- gravure d'une pluralité de trous dans la couche sacrificielle,
- dépôt d'un matériau d'ancrage dans les trous et sur la couche sacrificielle autour des trous, formant les plots d'ancrage,
- suppression de la couche sacrificielle.

Le procédé de réalisation du capteur de force peut comporter en outre, entre l'étape de réalisation des moyens de détection d'une déformation de la membrane et l'étape de réalisation des moyens d'adhérence, au moins une étape de dépôt d'une couche électriquement isolante sur ladite une des faces principales de la membrane déformable, recouvrant au moins une partie des moyens de détection d'une déformation de la membrane, les moyens d'adhérence étant ensuite réalisés sur la couche électriquement isolante.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
- la figure 1 représente un capteur de force selon l'art antérieur,
- la figure 2 représente une vue en coupe de profil d'un capteur de force, objet de la présente invention, selon un premier mode de réalisation,
- la figure 3 représente un exemple de disposition en deux ponts de Wheatstone à 90° de jauges de contraintes d'un capteur de force, objet de la présente invention, selon le premier mode de réalisation,
- la figure 4 représente un schéma électrique équivalent des jauges de contraintes formant deux ponts de Wheatstone et représentées sur la figure 3,
- les figures 5 et 6 représentent des vues en coupe de profil d'un capteur de force, objet de la présente invention, respectivement selon un second mode de réalisation et selon une variante du second mode de réalisation,
- les figures 7A et 7B représentent des vues de dessus des électrodes d'un capteur de force, objet de la présente invention, selon deux variantes du second mode de réalisation,
- les figures 8A à 8E représentent des étapes d'un procédé de réalisation du capteur de force, objet de la présente invention, selon le premier mode de réalisation ;
- les figures 9A à 9D représentent des étapes d'un procédé de réalisation du capteur de force, objet de la présente invention, selon le second mode de réalisation,
- les figures 10A à 10D et 11A à 11D représentent des étapes de deux variantes de réalisation de plots d'ancrage d'un capteur de force, objet de la présente invention, selon le second mode de réalisation.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

On se réfère tout d'abord à la figure 2 qui représente un capteur de force 100 selon un premier mode de réalisation.

Ce capteur 100 est réalisé à partir d'un substrat 102, par exemple à base de semi-conducteur tel que du silicium. Le capteur 100 comporte une membrane déformable 104 comportant une portion du substrat 102 gravée sur une partie de l'épaisseur du substrat 102. La membrane déformable 104 est ici sensiblement plane, ces dimensions dans le plan du substrat 102, c'est-à-dire dans un plan parallèle au plan (X,Y) représenté sur la figure 2, étant très supérieures à l'épaisseur de la membrane 104 (dimension selon l'axe Z perpendiculaire au plan du substrat 102). La membrane 104 comporte deux faces principales parallèles au plan du substrat 102. Des portions 105 non gravées du substrat 102 forment des zones d'ancrage périphériques de la membrane 102. Dans ce premier mode de réalisation, la forme de la membrane 104 dans le plan du substrat 102 est un disque. Toutefois, la membrane 104 peut avoir, dans le plan du substrat 102, une toute autre forme. L'épaisseur de la membrane 104 (dimension selon l'axe Z représenté sur la figure 2) est par exemple comprise entre environ 1 µm et 100 µm.

La membrane 104 est disposée au-dessus d'une cavité 111 formée dans le substrat 102, cette cavité 111 se trouvant entre les portions 105 non gravées.

Le capteur 100 comporte également des jauges de contraintes 106, ici de type piézorésistif, réalisées dans la membrane 104, au niveau d'une des faces principales de la membrane 104. Des interconnexions 108 réalisées sur la membrane 104 relient électriquement les jauges de contraintes 106 à des moyens de traitement, non représentés, aptes à traiter les informations délivrées par les jauges de contraintes 106 (variations des résistances de ces jauges).

Une couche électriquement isolante 110, par exemple à base d'un diélectrique tel que du SiO₂, est disposée sur le substrat 102 et la membrane 104, recouvrant ainsi les jauges de contraintes 106 et les interconnexions 108. Enfin, une couche de colle 112 est disposée sur la couche d'isolation 110, rendant ainsi solidaire la membrane déformable 104 à un matériau élastomère 114 dans lequel la force à mesurer s'exerce. La couche de colle 112 est par exemple à base de colle époxy et/ou polyuréthane, et a par exemple une épaisseur comprise entre environ 0,1 µm et 10 µm. Ce matériau élastomère 114 est ici formé par une couche à base d'un seul matériau. Toutefois, il est également possible que le matériau élastomère 114 soit formé par la superposition de plusieurs couches de matériaux différents ou non. Dans ce premier mode de réalisation, le capteur 100 est noyé dans le matériau élastomère 114 qui est par exemple à base de caoutchouc, le capteur 100 étant par exemple destiné à mesurer des forces exercées par la route sur la surface d'un pneumatique à base du matériau élastomère 114. Dans une variante, le matériau élastomère 114 pourrait être à base de polyuréthane ou encore de polymère siliconé tel que du polydiméthylsiloxane (PDMS). Dans une variante, il est également possible que le capteur 100 ne soit pas noyé dans le matériau élastomère 114 mais que seule la couche de colle 112 soit en contact avec ce matériau élastomère 114.

Ainsi, lorsque le matériau élastomère 114 est soumis à une force que l'on souhaite mesurer, cette force est transmise à la membrane 104 qui se déforme sur la totalité de sa surface de manière similaire au matériau élastomère 114 par l'intermédiaire de la couche de colle 112 qui forme une solide liaison mécanique grâce à l'adhérence réalisée entre la membrane déformable 104 et le matériau élastomère 114. Cette déformation est notamment possible grâce au fait que la membrane déformable 104 soit disposée face à la cavité 111 et puisse se déformer dans la cavité 111. La déformation de la membrane 104 implique que les jauges de contraintes 106 se déforment également. Les valeurs des résistances des jauges de contraintes 106 varient alors en fonction de la déformation subie, ce qui permet, en mesurant ces variations de résistances, de mesurer la valeur et la direction de la force ayant initialement déformé le matériau élastomère 114.

Les jauges de contraintes 106 sont réparties sur l'ensemble de la membrane 104 afin de pouvoir identifier les différentes composantes de la force à détecter. Ainsi, en choisissant un nombre de jauges de contraintes 106 approprié et en les disposant de manière adaptée, on réalise un capteur de force 100 triaxial apte à mesurer des composantes de forces selon les trois axes X, Y et Z d'un repère orthogonal, et donc permettant de mesurer n'importe quelle force orientée selon une direction quelconque dans l'espace.

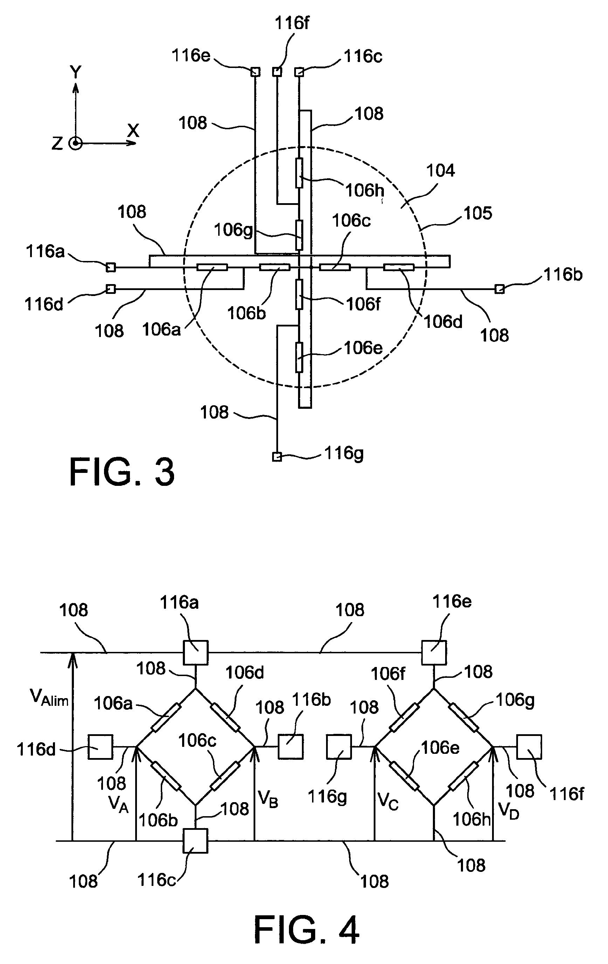

Les jauges de contraintes 106 peuvent par exemple former deux ponts de Wheatstone comme sur l'exemple illustré sur la figure 3. Sur cette figure, la membrane 104, vue de dessus, est représentée symboliquement par un trait pointillé 105 formant un cercle (forme de la membrane 104 dans le plan (X,Y)). Quatre premières jauges de contraintes 106a à 106d sont disposées le long d'un axe horizontal (parallèle à l'axe X) passant par le centre du cercle 105 formé par la membrane 104, et alignées selon une première direction. Ces quatre premières jauges de contraintes 106a à 106d sont reliées entre elles par les interconnexions 108 et forment un premier pont de Wheatstone. Les interconnexions 108 relient également les quatre premières jauges de contraintes 106a à 106d à quatre contacts électriques 116a à 116d formant les entrées et les sorties de ce premier pont de Wheatstone. Quatre secondes jauges de contraintes 106e à 106h sont également disposées le long d'un axe vertical (parallèle à l'axe Y) passant par le centre du cercle 105 formé par la membrane 104, et alignées selon une seconde direction perpendiculaire à la première direction. Ces quatre secondes jauges de contraintes 106e à 106h sont reliées entre elles par les interconnexions 108 et forment un second pont de Wheatstone. Les interconnexions 108 relient également les quatre jauges de contraintes 106e à 106h à trois contacts électriques 116e à 116g et au contact électrique 116c formant les entrées et les sorties de ce second pont de Wheatstone. Les jauges de contraintes 106a à 106h sont par exemple de forme parallélépipédique rectangle et comportent chacune leur plus grande dimension parallèle à la première ou la seconde direction.

Un schéma électrique des deux ponts de Wheatstone de la figure 3 est représenté sur la figure 4. Une tension d'alimentation Vₐₗᵢₘ est appliquée entre les contacts électriques 116a et 116c, ainsi qu'entre le contact électrique 116e et l'intersection des jauges de contraintes 106e et 106h. Des tensions V_{A}, V_{B}, V_{C} et V_{D} sont ensuite mesurées, correspondant respectivement aux potentiels des contacts électriques 116d, 116b, 116g et 116f.

Le déséquilibre du premier pont de Wheatstone, correspondant à V_{B} - V_{A}, est proportionnel à la composante parallèle à la direction de l'axe X, correspondant à la première direction selon laquelle les quatre premières jauges de contraintes 106a à 106d sont alignées, de la force à mesurer. Le déséquilibre du second pont de Wheatstone, correspondant à V_{D} - V_{C}, est proportionnel à la composante parallèle à la direction de l'axe Y, correspondant à la seconde direction selon laquelle les quatre secondes jauges de contraintes 106e à 106h sont alignées, de la force à mesurer. Enfin, le mode commun des deux ponts de Wheatstone, correspondant à (V_{A} + V_{E}) - (V_{D} + V_{C}), est proportionnel à la composante parallèle à l'axe Z, c'est-à-dire perpendiculaire au plan de la membrane 104, de la force que l'on cherche à mesurer. Les mesures de ces trois composantes permettent donc de déterminer complètement la direction et l'intensité de la force transmise par le matériau élastomère 114.

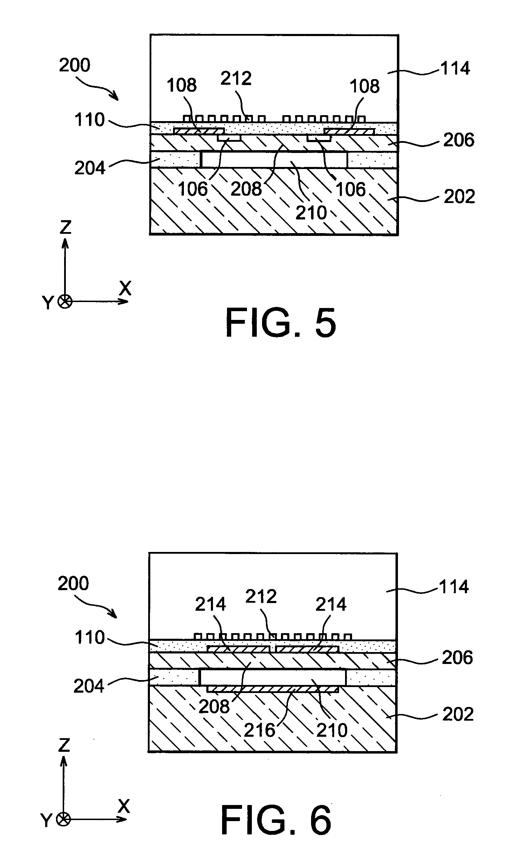

On se réfère maintenant à la figure 5 qui représente un capteur de force 200 selon un second mode de réalisation.

Par rapport au capteur 100 précédemment décrit, le capteur 200 n'est pas réalisé à partir d'un substrat de type bulk (massif) mais à partir d'un substrat SOI (semi-conducteur sur isolant) comportant une couche massive 202, par exemple à base de semi-conducteur tel que du silicium, sur laquelle sont disposées une couche diélectrique 204, par exemple à base de SiO₂ et une couche active 206, ici également à base de silicium.

Le capteur 200 comporte une membrane 208 formée par une portion de la couche active 206 disposée au-dessus d'une cavité 210 formée dans la sous-couche diélectrique 204. La membrane 208 a par exemple une forme, dans le plan du substrat parallèle au plan (X,Y), similaire à celle de la membrane 104 précédemment décrite, c'est-à-dire un disque. Les portions de la couche active 206 périphériques à la membrane 208 forment des zones d'ancrage périphériques de la membrane 208.

De manière analogue au capteur 100, le capteur 200 comporte les jauges de contraintes 106, les interconnexions 108 et la couche isolante 110 recouvrant les jauges de contraintes 106, les interconnexions 108 et la couche active 206.

Toutefois, par rapport au capteur 100 selon le premier mode de réalisation, la liaison mécanique entre le matériau élastomère 114 et la membrane 208 n'est pas réalisée par une couche de colle mais par une pluralité de plots d'ancrage 212 réalisés sur la membrane 208 par l'intermédiaire de la couche isolante 110. De manière analogue à la couche de colle 112, les plots d'ancrage 212 réalisent une solide liaison mécanique entre le matériau élastomère 114 et la membrane 208. Les dimensions des plots d'ancrage 212 (dimensions selon les axes X, Y ou Z) ainsi que l'espacement entre deux plots d'ancrage 212 voisins peuvent par exemple être compris entre environ 100 nm et 10 µm. De plus, les sections des plots d'ancrage dans le plan du substrat (parallèle au plan (X,Y)) peuvent avoir une forme de disque, de carré ou une toute autre forme.

De manière avantageuse, les plots d'ancrage 212 peuvent avoir une forme de « champignon », cette forme comportant au moins deux parties, l'une formant la base du plot et l'autre formant le sommet, ou partie supérieure du plot, la base du plot comportant une section dans le plan du substrat de dimensions inférieures à celles de la section du sommet du plot. En réalisant des plots d'ancrage 212 de cette forme, on améliore encore la liaison mécanique entre la membrane 208 et le matériau élastomère 114. Les plots d'ancrage peuvent être à base de n'importe quel matériau, par exemple un matériau métallique ou diélectrique.

Dans une variante du second mode de réalisation, le capteur 200 pourrait être réalisé à partir d'un substrat massif et non à partir d'un substrat SOI, de manière analogue au capteur 100 précédemment décrit. La membrane 208 serait alors formée par une portion de ce substrat massif au niveau de laquelle le substrat aurait été gravé sur une partie de son épaisseur.

On se réfère à la figure 6 qui représente le capteur 200 réalisé selon une autre variante du second mode de réalisation. Par rapport au capteur précédemment décrit en liaison avec la figure 5, ce capteur 200 ne comporte pas de jauges de contraintes piézorésistives pour détecter la déformation de la membrane 208 mais plusieurs électrodes 214 disposées sur la membrane 208. Bien que sur la figure 6 seules deux électrodes 214 soient représentées, le capteur 200 comporte de préférence au moins trois électrodes 214 afin de réaliser une détection triaxiale de la force à détecter déformant la membrane 208. De plus, dans cette variante de réalisation, ce capteur 200 comporte en outre une électrode commune 216 réalisée sur ou dans la couche massive 202, dans la cavité 210, en regard de la membrane 208.

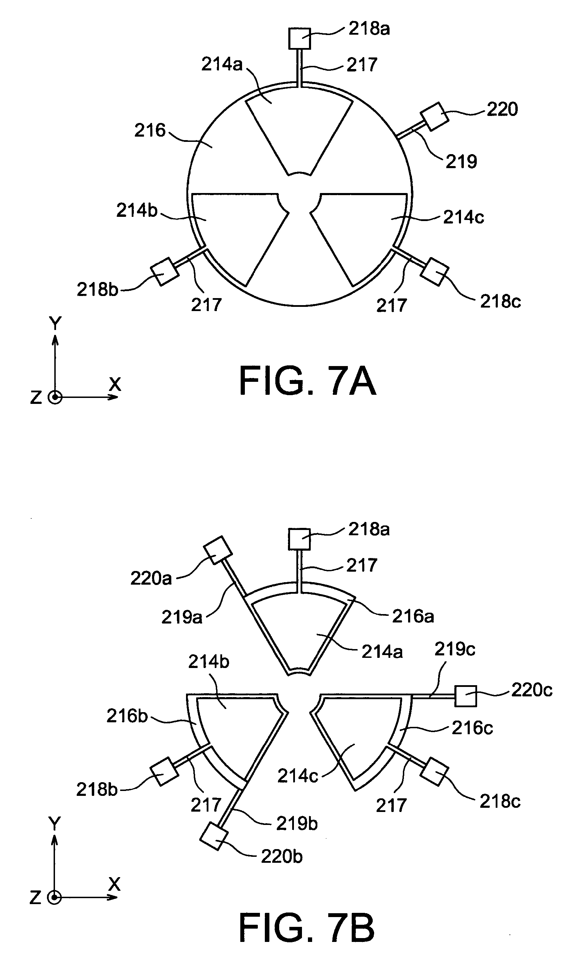

La figure 7A représente une vue de dessus des trois électrodes 214a à 214c réalisées sur la membrane 208 et de l'électrode commune 216 disposée dans la cavité 210. Sur cette figure, on voit que chacune des électrodes 214a, 214b et 214c est reliée à un contact électrique 218a, 218b, 218c par l'intermédiaire d'une interconnexion 217. L'électrode commune 216 est également reliée à un contact électrique 220 par l'intermédiaire d'une interconnexion 219. Dans une variante représentée sur la figure 7B, l'électrode commune 216 est remplacée par trois électrodes inférieures 216a, 216b et 216c sensiblement superposées aux trois électrodes 214a, 214b et 214c, chacune reliée à un contact électrique 220a, 220b et 220c par l'intermédiaire d'une interconnexion 219a, 219b et 219c.

Ces électrodes forment ainsi des capacités dont l'entrefer est variable avec la déformation de la membrane 208 du capteur 200. En mesurant les trois capacités entre chacune des trois électrodes 214 disposées sur la membrane 208 du capteur 200 et l'électrode commune 216 ou les électrodes inférieures 216a, 216b, 216c disposées dans la cavité 210, il est possible de déterminer la valeur des 3 composantes (selon les trois axes X, Y et Z) de la force s'exerçant dans le matériau élastomère 114.

Dans une autre variante, il est possible de réaliser plus de trois capacités variables. Il est par exemple possible de doter le capteur de quatre électrodes supérieures, deux de ces électrodes étant disposées le long d'un axe horizontal passant par le centre de la membrane et les deux autres électrodes étant disposées le long d'un axe vertical passant par le centre de la membrane (ces axes étant compris dans le plan passant par la face principale de la membrane sur laquelle sont réalisées les électrodes supérieures). Ces quatre électrodes supérieures sont disposées à une même distance du centre de la membrane. Il est possible alors de faire appel à une seule électrode commune ou à quatre électrodes inférieures afin de former quatre capacités variables. Une telle configuration à quatre capacités variables permet de simplifier les mesures à réaliser pour caractériser la force que l'on cherche à détecter.

Ces variantes de réalisation du capteur réalisant une détection capacitive des déformations de la membrane du capteur peuvent également s'appliquer au capteur 100 précédemment décrit. Dans ce cas, les trois électrodes 214 seraient disposées sur la membrane 104 et l'électrode commune ou les électrodes inférieures 216 seraient disposées dans le creux réalisé dans le substrat 102, sur une partie non déformable du capteur qui serait disposée sous la membrane 104.

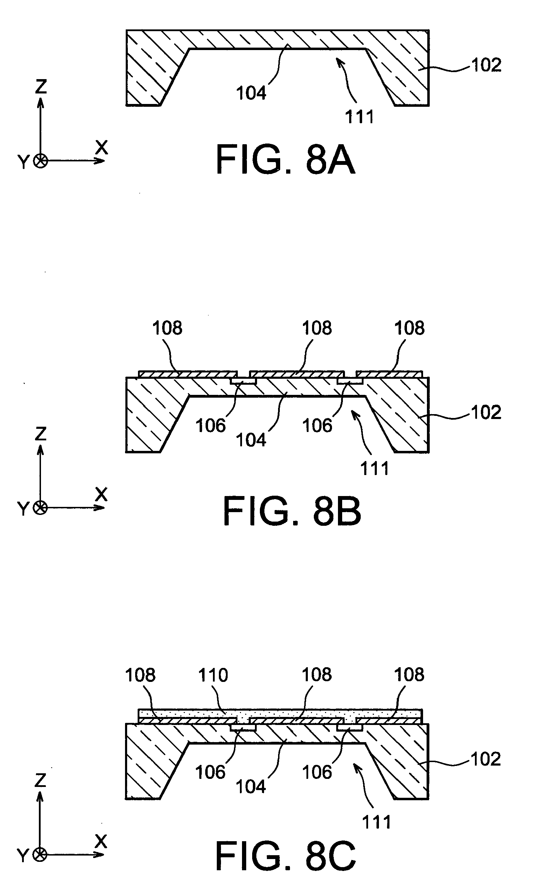

On se réfère maintenant aux figures 8A à 8E qui représentent des étapes d'un procédé de réalisation du capteur 100 selon le premier mode de réalisation.

Comme représenté sur la figure 8A, on réalise tout d'abord un usinage du substrat 102, par exemple par une gravure chimique anisotrope, sur une partie de l'épaisseur du substrat 102, formant ainsi la membrane 104 et la cavité 111.

On réalise ensuite les jauges de contraintes 106 dans la membrane 104, par exemple par une diffusion de dopants, du type de conductivité opposé à celui du substrat 102, qui forme des portions de semi-conducteur dopé, ces portions dopées formant les jauges de contraintes piézorésistives 106. Les interconnexions 108 sont ensuite réalisées par un dépôt d'une couche électriquement conductrice, par exemple à base d'un métal, et une gravure de cette couche électriquement conductrice (figure 8B).

La couche isolante 110 est ensuite déposée sur la membrane 104, recouvrant ainsi les jauges de contraintes 106 et les interconnexions 108 (figure 8C).

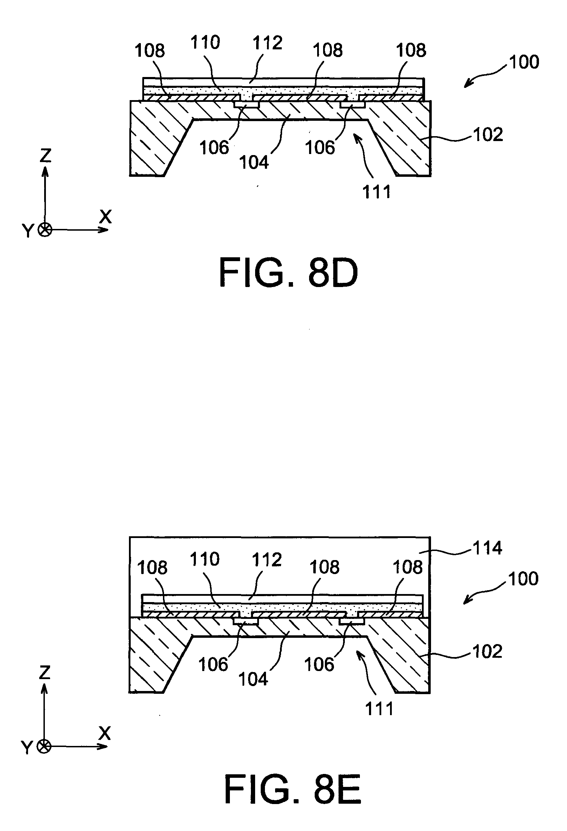

Comme représenté sur la figure 8D, la couche de colle 112 est ensuite déposée sur la couche isolante 110. Enfin, comme représenté sur la figure 8E, la couche de colle 112 est mise en contact avec le matériau élastomère 114, soit en disposant le capteur 100 contre le matériau élastomère 114, soit en noyant complètement le capteur 100 dans le matériau élastomère 114.

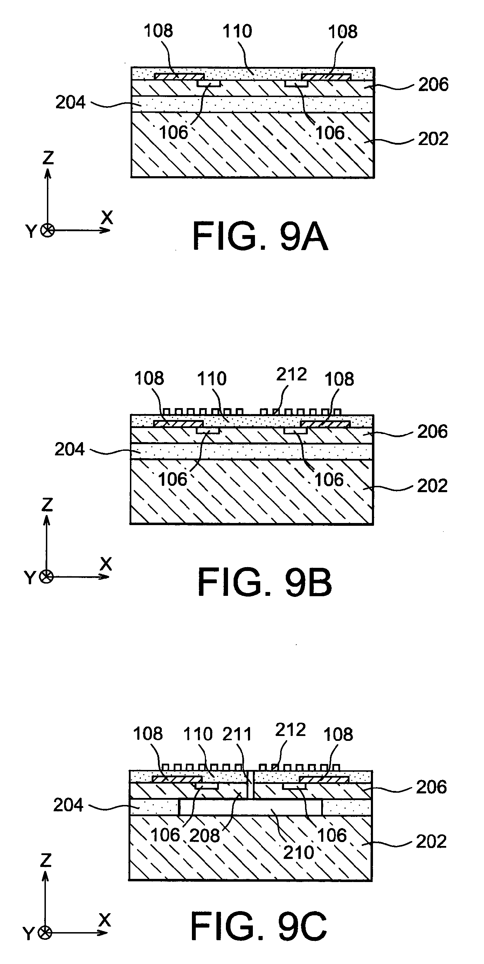

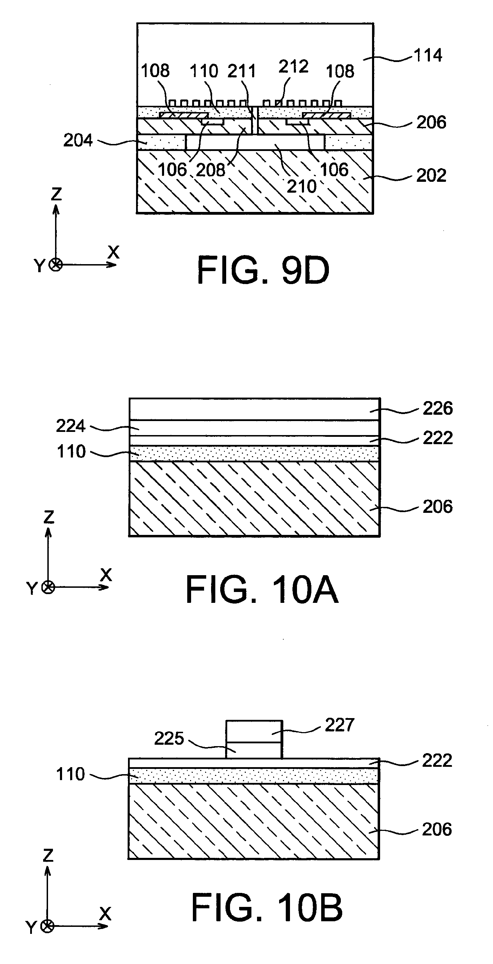

On se réfère maintenant aux figures 9A à 9D qui représentent des étapes d'un procédé de réalisation du capteur de force 200 selon le second mode de réalisation précédemment décrit en liaison avec la figure 5.

A partir du substrat SOI comprenant les couches 202, 204 et 206, on réalise tout d'abord les jauges de contraintes piézorésistives 106 dans la couche active 206 de silicium par exemple par implantation de dopants telle que précédemment décrit pour le capteur 100, puis les interconnexions 108 sur la couche active 206 reliant électriquement les jauges de contraintes 106. La couche d'isolation 110 est ensuite déposée sur la couche active 206, recouvrant les jauges de contraintes 106 et les interconnexions 108 (figure 9A).

Comme représenté sur la figure 9B, on réalise le dépôt d'une couche, par exemple métallique, puis une gravure de cette couche pour former les plots d'ancrage 212. Dans ce cas, les plots d'ancrage 212 ont une section, dans le plan du substrat (parallèle au plan (X,Y)), de dimensions sensiblement constantes sur toute leur hauteur (dimension selon l'axe Z).

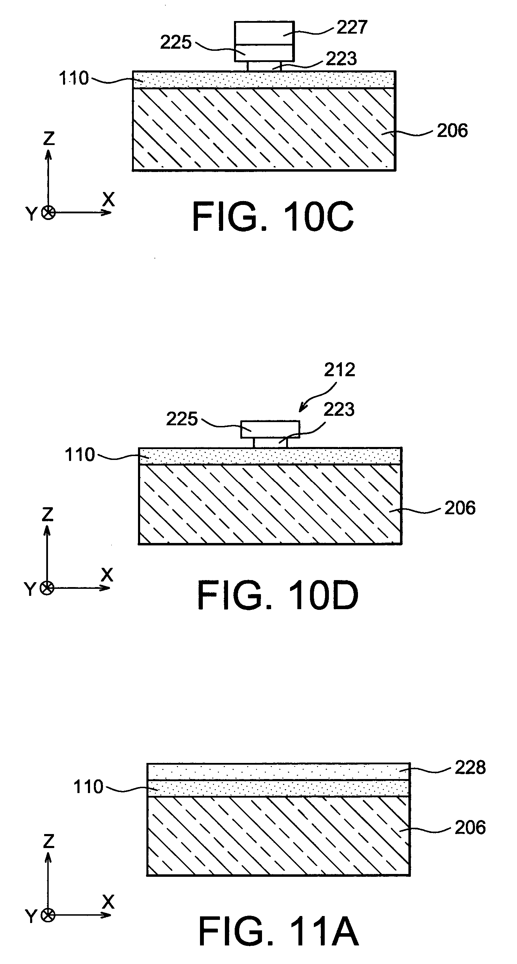

Dans un mode de réalisation préféré, les plots d'ancrage 212 peuvent avoir une forme de « champignon », c'est-à-dire comportant une base de section dans le plan du substrat de dimensions inférieures à celles de la section du sommet du plot. Des exemples de réalisation de tels plots d'ancrage 212 seront décrits plus loin en liaison avec les figures 10A à 10D et 11A à 11D.

Comme représenté sur la figure 9C, on grave une ouverture 211, par exemple un trou de diamètre par exemple inférieur à environ 10 µm, à travers la couche isolante 110 et la couche active 206 afin former un accès à la couche diélectrique 204. Ce trou est par exemple réalisé entre deux plots d'ancrage 212 voisins. On grave alors la couche diélectrique 204 par attaque chimique à travers l'ouverture 211 pour former la cavité 210 et réaliser ainsi la membrane 208. Enfin, la couche isolante 110 et les plots d'ancrage 212 sont mis en contact avec le matériau élastomère 114 soit en disposant le capteur 200 contre le matériau élastomère 114, soit en noyant complètement le capteur 200 dans le matériau élastomère 114.

On se réfère maintenant aux figures 10A à 10D qui décrivent des étapes de réalisation d'un plot d'ancrage 212 en forme de « champignon » selon un premier exemple de réalisation. Tout d'abord, on dépose par exemple deux couches 222, 224 superposées l'une sur l'autre. Les matériaux de la couche inférieure 222 et de la couche supérieure 224 sont choisis tels qu'ils puissent être gravés sélectivement l'un par rapport à l'autre. On choisit par exemple une couche inférieure 222 à base de SiO₂ et une couche supérieure 224 à base de SiN, ou une couche inférieure 222 à base de silicium polycristallin et une couche supérieure 224 à base de SiO₂. Une couche de résine photosensible 226 est ensuite déposée sur la couche supérieure 224 (figure 10A). On réalise ensuite des étapes de photolithographie et de gravure de la couche de résine 226 pour former une portion 227 de résine photosensible de forme et de dimensions correspondant à la forme et aux dimensions souhaitées du sommet du plot d'ancrage, puis une gravure sélective de la couche supérieure 224 en utilisant la portion de résine 227 en tant que masque de gravure, formant ainsi le sommet 225 du plot d'ancrage (figure 10B). On grave ensuite de manière sélective la couche inférieure 222 en utilisant la portion de résine 227 en tant que masque de gravure. Une surgravure de cette couche 222 est réalisée en prolongeant le temps de gravure de la couche inférieure 222 par rapport à celui de la gravure de la couche supérieure 224 afin qu'une portion restante 223 de la couche inférieure 222 forme une base du plot d'ancrage 212 de dimensions inférieures à celles du sommet 225 du plot d'ancrage 212 (figure 10C). Enfin, comme représenté sur la figure 10D, on retire la portion de résine 227, par exemple par gravure. Bien que les étapes décrites ci-dessus concernent la réalisation d'un seul plot d'ancrage 212, touts les plots d'ancrage 212 du capteur de force 200 sont réalisés simultanément et de manière collective de manière analogue à celle décrite ici.

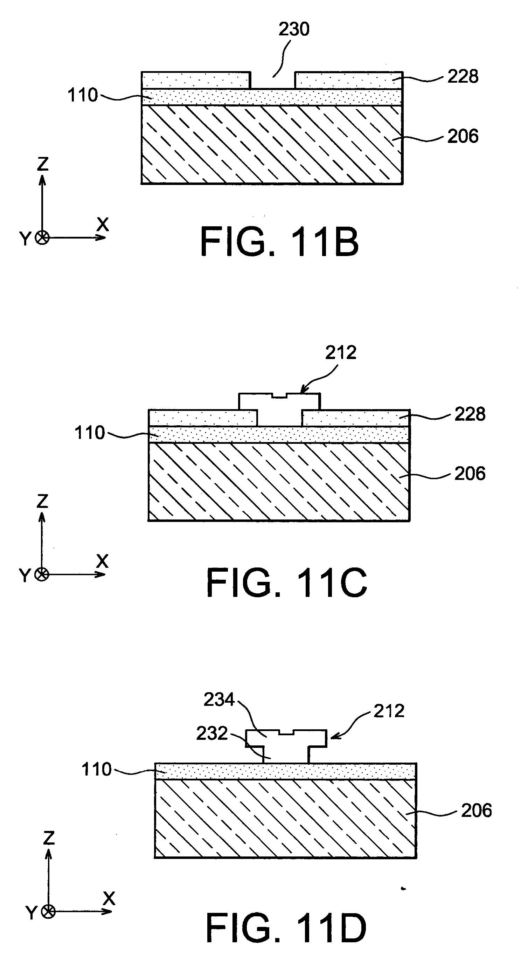

Un second exemple de réalisation de plots d'ancrage 212 en forme de « champignons » est décrit en liaison avec les figures 11A à 11D. Comme représenté sur la figure 11A, on dépose tout d'abord une couche sacrificielle 228, par exemple à base de SiO₂, sur la couche isolante 110. On grave ensuite la couche sacrificielle 228 afin de former dans la couche sacrificielle une ouverture 230 dont la forme et les dimensions correspondent à celles de la base du plot d'ancrage 212 (figure 11B). On dépose ensuite dans l'ouverture 230 et sur la couche sacrificielle 228, autour de l'ouverture 230, le matériau d'ancrage permettant de former le plot d'ancrage 212 (figure 11C). Enfin, la couche sacrificielle 228 est éliminée, par exemple par gravure (figure 11D). Le plot d'ancrage 212 obtenu comporte donc une base 232 de dimensions inférieures à celles d'une partie supérieure 234 du plot d'ancrage 212. Là encore, tous les plots d'ancrage 212 sont réalisés simultanément et de manière collective par les étapes décrites ci-dessus en liaison avec les figures 11A à 11D.

## Revendications

1. Capteur triaxial de force (100, 200) comportant au moins :
- une membrane déformable (104, 208),
- des moyens de détection (106, 214, 216) d'une déformation de la membrane (104, 208) aptes à réaliser une détection triaxiale de la force à détecter, disposés sur une des faces principales de la membrane déformable (104, 208),
- des moyens d'adhérence (112, 212) disposés au moins sur ladite une des faces principales de la membrane déformable (104, 208), aptes à rendre solidaire ladite une des faces principales de la membrane déformable (104, 208) à au moins un matériau élastomère (114) destiné à être sollicité par la force à détecter, et répartis uniformément sur l'ensemble de la surface de ladite une des faces principales de la membrane déformable (104, 208), la membrane déformable (104, 208) étant disposée entre une cavité (111, 210) et le matériau élastomère (114).

2. Capteur triaxial de force (100) selon la revendication 1, dans lequel les moyens d'adhérence comportent au moins une couche de colle (112) destinée à être disposée entre ladite une des faces principales de la membrane déformable (104) et le matériau élastomère (114).

3. Capteur triaxial de force (200) selon la revendication 1, dans lequel les moyens d'adhérence comportent une pluralité de plots d'ancrage (212) destinés à être disposés entre ladite une des faces principales de la membrane déformable (208) et le matériau élastomère (114).

4. Capteur triaxial de force (200) selon la revendication 3, dans lequel chaque plot d'ancrage (212) a une section, dans un plan parallèle au plan passant par ladite une des faces principales de la membrane déformable (208), de dimensions comprises entre environ 100 nm et 10 µm et/ou dans lequel un espacement entre deux plots d'ancrage (212) voisins est compris entre environ 100 nm et 10 µm.

5. Capteur triaxial de force (200) selon l'une des revendications 3 ou 4, dans lequel les plots d'ancrage (212) sont à base de SiN et/ou de SiO₂ et/ou de silicium polycristallin.

6. Capteur triaxial de force (200) selon l'une des revendication 3 à 5, dans lequel chaque plot d'ancrage (212) comporte une base (223, 232) formée par une première portion de matériau et une partie supérieure (225, 234) formée par une seconde portion de matériau, la base (223, 232) étant disposée entre ladite une des faces principales de la membrane (208) et la partie supérieure (225, 234) et comportant une section, dans un plan parallèle à un plan passant par ladite une des faces principales de la membrane (208), de dimensions inférieures à celles d'une section, dans un plan parallèle au plan passant par ladite une des faces principales de la membrane (208), de la partie supérieure (225, 234).

7. Capteur triaxial de force (100, 200) selon l'une des revendications précédentes, dans lequel les moyens de détection d'une déformation de la membrane (104, 208) comportent une pluralité de jauges de contraintes (106) reliées électriquement entre elles en formant deux ponts de Wheatstone.

8. Capteur triaxial de force (200) selon l'une des revendications 1 à 6, dans lequel les moyens de détection d'une déformation de la membrane comportent au moins trois premières électrodes de détection capacitive (214a, 214b, 214c) disposée contre ladite une des faces principales de la membrane (208) et au moins une seconde électrode de détection capacitive (216, 216a, 216b, 216c) solidaire d'une partie non déformable du capteur (200) et disposée en regard de la membrane déformable (208).

9. Capteur triaxial de force (100, 200) selon l'une des revendications précédentes, dans lequel la membrane déformable (104, 208) comporte une portion d'un substrat (102) à base de semi-conducteur ou une portion d'une couche active (206) d'un substrat disposée au-dessus de la cavité (111, 210) formée dans une sous-couche diélectrique (204) du substrat.

10. Capteur triaxial de force (100, 200) selon l'une des revendications précédentes, comportant en outre une couche électriquement isolante (110) disposée entre la membrane déformable (104, 208) et les moyens d'adhérence (112, 212).

11. Capteur triaxial de force (100, 200) selon l'une des revendications précédentes, comportant en outre des moyens de traitement d'informations issues des moyens de détection (106, 214, 216) d'une déformation de la membrane (104, 208), aptes à déterminer la direction et l'intensité de la force à détecter à partir des informations issues des moyens de détection (106, 214, 216).

12. Procédé de réalisation d'un capteur triaxial de force (100, 200), comportant au moins les étapes suivantes :
- réalisation d'une membrane déformable (104, 208),
- réalisation de moyens de détection (106, 214, 216) d'une déformation de la membrane (104, 208) aptes à réaliser une détection triaxial de la force à détecter, sur une des faces principales de la membrane déformable (104, 208),
- réalisation de moyens d'adhérence (112, 212) sur au moins ladite une des faces principales de la membrane déformable (104, 208) répartis uniformément sur l'ensemble de la surface de ladite une des faces principales de la membrane déformable (104, 208),
les moyens d'adhérence (112, 212) étant aptes à rendre solidaire ladite une des faces principales de la membrane déformable (104, 208) à au moins un matériau élastomère (114) destiné à être sollicité par la force à détecter et la membrane déformable (104, 208) étant disposée entre une cavité (111, 210) et le matériau élastomère (114).

13. Procédé de réalisation d'un capteur triaxial de force (100) selon la revendication 12, dans lequel la réalisation de la membrane déformable (104) comporte une étape d'usinage d'une portion d'un substrat (102) à base de semi-conducteur, formant également la cavité (111).

14. Procédé de réalisation d'un capteur triaxial de force (200) selon la revendication 12, dans lequel la réalisation de la membrane déformable (208) comporte une étape de réalisation d'au moins une ouverture (211) à travers au moins une couche active (206) d'un substrat et une étape de gravure d'une portion d'une sous-couche diélectrique (204) du substrat à travers l'ouverture (211) formant la cavité (210) au-dessus de laquelle une portion de la couche active (206) forme la membrane déformable (208).

15. Procédé de réalisation d'un capteur triaxial de force (100, 200) selon l'une des revendications 12 à 14, dans lequel la réalisation des moyens de détection d'une déformation de la membrane (104, 208) comporte une étape d'implantation de dopants dans la membrane (104, 208), formant dans la membrane déformable (104, 208) une pluralité de jauges de contraintes (106) reliées électriquement entre elles en formant deux ponts de Wheatstone.

16. Procédé de réalisation d'un capteur triaxial de force (200) selon l'une des revendications 12 à 14, dans lequel la réalisation des moyens de détection d'une déformation de la membrane (208) comporte une étape de réalisation d'au moins trois premières électrodes de détection capacitive (214a, 214b, 214c) contre ladite une des faces principales de la membrane (208) et une étape de réalisation d'au moins une seconde électrode de détection capacitive (216, 216a, 216b, 216c) solidaire d'une partie non déformable du capteur (200) en regard de la membrane déformable (208).

17. Procédé de réalisation d'un capteur triaxial de force (100) selon l'une des revendications 12 à 16, dans lequel la réalisation des moyens d'adhérence comporte au moins une étape de dépôt d'une couche de colle (112) sur ladite une des faces principales de la membrane déformable (104).

18. Procédé de réalisation d'un capteur triaxial de force (200) selon l'une des revendications 12 à 16, dans lequel la réalisation des moyens d'adhérence comporte au moins la réalisation d'une pluralité de plots d'ancrage (212).

19. Procédé de réalisation d'un capteur triaxial de force (200) selon la revendication 18, dans lequel la réalisation des plots d'ancrage (212) est obtenue par la mise en oeuvre des étapes suivantes :
- dépôt d'une première couche (222) sur ladite une des faces principales de la membrane déformable (208) et d'une seconde couche (224) sur la première couche (222), la première et la seconde couches (222, 224) étant chacune à base d'un matériau pouvant être gravé sélectivement l'un par rapport à l'autre,
- gravure de la seconde couche (224), laissant subsister des portions (225) de la seconde couche (224) formant des parties supérieures des plots d'ancrage (212),
- gravure de la première couche (222) pendant une durée supérieure à celle de la précédente étape de gravure de la seconde couche (224), laissant subsister, sous les portions restantes (225) de la seconde couche (224), des portions (223) de la première couche (222) formant chacune une base d'un plot d'ancrage (212).

20. Procédé de réalisation d'un capteur triaxial de force (200) selon la revendication 18, dans lequel la réalisation des plots d'ancrage (212) est obtenue par la mise en oeuvre des étapes suivantes :
- dépôt d'une couche sacrificielle (228) sur ladite une des faces principales de la membrane déformable (208),
- gravure d'une pluralité de trous (230) dans la couche sacrificielle (228),
- dépôt d'un matériau d'ancrage (212) dans les trous (230) et sur la couche sacrificielle (228) autour des trous (230), formant les plots d'ancrage (212),
- suppression de la couche sacrificielle (228).

21. Procédé de réalisation d'un capteur triaxial de force (100, 200) selon l'une des revendications 12 à 20, comportant en outre, entre l'étape de réalisation des moyens de détection (106, 214, 216) d'une déformation de la membrane (104, 208) et l'étape de réalisation des moyens d'adhérence (112, 212), au moins une étape de dépôt d'une couche électriquement isolante (110) sur ladite une des faces principales de la membrane déformable (104, 208), recouvrant au moins une partie des moyens de détection (106, 214) d'une déformation de la membrane (104, 208), les moyens d'adhérence (112, 212) étant ensuite réalisés sur la couche électriquement isolante (110).

## Claims

1. Triaxial force sensor (100, 200) comprising at least:
- a deformable membrane (104, 208),
- means (106, 214, 216) of detecting a deformation of the membrane (104, 208) able to carry out a triaxial detection of the force to be detected, disposed on one of the principal faces of the deformable membrane (104, 208),
- adhesion means (112, 212) disposed at least on said one of the principal faces of the deformable membrane (104, 208), able to secure said one of the principal faces of the deformable membrane (104, 208) to at least one elastomer material (114) intended to be acted upon by the force to be detected, and distributed uniformly on the whole of the surface of said one of the principal faces of the deformable membrane (104, 208), the deformable membrane (104, 208) being disposed between a cavity (111, 210) and the elastomer material (114).

2. Triaxial force sensor (100) according to claim 1, in which the adhesion means comprise at least one layer of adhesive (112) intended to be disposed between said one of the principal faces of the deformable membrane (104) and the elastomer material (114).

3. Triaxial force sensor (200) according to claim 1, in which the adhesion means comprise a plurality of anchoring pins (212) intended to be disposed between said one of the principal faces of the deformable membrane (208) and the elastomer material (114).

4. Triaxial force sensor (200) according to claim 3, in which each anchoring pin (212) has as cross-section, in a plane parallel to the plane passing through said one of the principal faces of the deformable membrane (208), with dimensions between approximately 100 nm and 10 µm and/or in which a spacing between two adjacent anchoring pins (212) is between approximately 100 nm and 10 µm.

5. Triaxial force sensor (200) according to one of claims 3 or 4, in which the anchoring pins (212) are composed of SiN and/or SiO₂ and/or polycrystalline silicon.

6. Triaxial force sensor (200) according to one of claims 3 to 5, in which each anchoring pin (212) comprises a base (223, 232) formed by a first portion of material and a top part (225, 234) formed by a second portion of material, the base (223, 232) being disposed between said one of the principal faces of the membrane (208) and the top part (225, 234) and comprising a cross-section, in a plane parallel to a plane passing through said one of the principal faces of the membrane (208), with dimensions less than those of a cross-section in a plane parallel to the plane passing through said one of the principal faces of the membrane (208), of the top part (225, 234).

7. Triaxial force sensor (100, 200) according to one of the preceding claims, in which the means of detecting a deformation of the membrane (104, 208) comprise a plurality of strain gauges (106) electrically connected to one another, forming two Wheatstone bridges.

8. Triaxial force sensor (200) according to one of claims 1 to 6, in which the means of detecting a deformation of the membrane comprise at least three first capacitive detection electrodes (214a, 214b, 214c) disposed against said one of the principal faces of the membrane (208) and at least a second capacitive detection electrode (216, 216a, 216b, 216c) secured to a non-deformable part of the sensor (200) and disposed opposite the deformable membrane (208).

9. Triaxial force sensor (100, 200) according to one of the preceding claims, in which the deformable membrane (104, 208) comprises a portion of a substrate (102) composed of a semiconductor or a portion of an active layer (206) of a substrate disposed above the cavity (111, 210) formed in a dielectric sublayer (204) of the substrate.

10. Triaxial force sensor (100, 200) according to one of the preceding claims, also comprising an electrically insulating layer (110), disposed between the deformable membrane (104, 208) and the adhesion means (112, 212).

11. Triaxial force sensor (100, 200) according to one of the preceding claims, also comprising means of processing information issuing from the means (106, 214, 216) of detecting a deformation of the membrane (104, 208), able to determine the direction and intensity of the force to be detected from the information issuing from the detection means (106, 214, 216).

12. Method of producing a triaxial force sensor (100, 200), comprising at least the following steps:
- production of a deformable membrane (104, 208),
- production of means of detecting (106, 214, 216) a deformation of the membrane (104, 208) suitable for carrying out a triaxial detection of the force to be detected, on one of the principal faces of the deformable membrane (104, 208),
- production of means of adhesion (112, 212) on at least said one of the principal faces of the deformable membrane (104, 208) distributed uniformly on the whole of the surface of said one of the principal faces of the deformable membrane (104, 208),
the adhesion means (112, 212) being able to secure said one of the principal faces of the deformable membrane (104, 208) to at least one elastomer material (114) intended to be acted on by the force to be detected and the deformable membrane (104, 208) being disposed between a cavity (111, 210) and the elastomer material (114).

13. Method of producing a triaxial force sensor (100) according to claim 12, in which the production of the deformable membrane (104) comprises a step of working a portion of a substrate (102) composed of a semi-conductor, also forming the cavity (111).

14. Method of producing a triaxial force sensor (200) according to claim 12, in which the production of the deformable membrane (208) comprises a step of producing at least one opening (211) through at least an active layer (206) of a substrate and a step of etching a portion of a dielectric sublayer (204) of the substrate through the opening (211) forming the cavity (210) above which a portion of the active layer (206) forms the deformable membrane (208).

15. Method of producing a triaxial force sensor (100, 200) according to one of claims 12 to 14, in which the production of the means of detecting a deformation of the membrane (104, 208) comprises a step of implanting dopants in the membrane (104, 208), forming in the deformable membrane (104, 208) a plurality of strain gauges (106) electrically connected to one another, forming two Wheatstone bridges.

16. Method of producing a triaxial force sensor (200) according to one of claims 12 to 14, in which the production of the means of detecting a deformation of the membrane (208) comprises a step of producing at least three first capacitive detection electrodes (214a, 214b, 214c) against said one of the principal faces of the membrane (208) and a step of producing at least a second capacitive detection electrode (216, 216a, 216b, 216c) secured to a non-deformable part of the sensor (200) opposite the deformable membrane (208).

17. Method of producing a triaxial force sensor (100) according to one of claims 12 to 16, in which the production of the adhesion means comprises at least a step of depositing a layer of adhesive (112) on said one of the principal faces of the deformable membrane (104).

18. Method of producing a triaxial force sensor (200) according to one of claims 12 to 16, in which the production of the adhesion means comprises at least the production of a plurality of anchoring pins (212).

19. Method of producing a triaxial force sensor (200) according to claim 18, in which the production of the anchoring pins (212) is obtained by implementing the following steps:
- deposition of a first layer (222) on said one of the principal faces of the deformable membrane (208) and of a second layer (224) on the first layer (222), the first and second layers (222, 224) each being composed of a material that can be etched selectively with respect to each other;
- etching of the second layer (224), leaving portions (225) of the second layer (224) forming upper parts of the anchoring pins (212);
- etching of the first layer (222) for a period greater than that of the first step of etching the second layer (224), leaving, under the remaining portions (225) of the second layer (224), portions (223) of the first layer (222) each forming a base of an anchoring pin (212).

20. Method of producing a triaxial force sensor (200) according to claim 18, in which the production of the anchoring pins (212) is obtained by implementing the following steps:
- deposition of a sacrificial layer (228) on said one of the principal faces of the deformable membrane (208),
- etching of a plurality of holes (230) in the sacrificial layer (228),
- deposition of an anchoring material (212) in the holes (230) and on the sacrificial layer (228) around the holes (230), forming the anchoring pins (212),
- elimination of the sacrificial layer (228).

21. Method of producing a triaxial force sensor (100, 200) according to one of claims 12 to 20, also comprising, between the step of producing the means (106, 214, 216) of detecting a deformation of the membrane (104, 208) and the step of producing the adhesion means (112, 212), at least one step of depositing an electrically insulating layer (110) on said one of the principal faces of the deformable membrane (104, 208), covering at least part of the means (106, 214) of detecting a deformation of the membrane (104, 208), the adhesion means (112, 212) then being produced on the electrically insulating layer (110).

## Patentansprüche

1. Triaxialer Kraftsensor (100, 200), welcher mindestens aufweist:
- eine verformbare Membran (104, 208),
- Mittel zur Detektion (106, 214, 216) einer Verformung der Membran (104, 208), die geeignet sind, eine triaxiale Detektion der zu detektierenden Kraft durchzuführen, und auf einer der Hauptflächen der verformbaren Membran (104, 208) angeordnet sind,
- Hautmittel (112, 212), die mindestens auf der einen der Hauptflächen der verformbaren Membran (104, 208) angeordnet sind, geeignet sind, die eine der Hauptflächen der verformbaren Membran (104, 208) mit mindestens einem elastomeren Material (114), das dazu bestimmt ist, durch die zu detektierende Kraft beansprucht zu werden, fest zu verbinden, und auf der gesamten Oberfläche der einen der Hauptflächen der verformbaren Membran (104, 208) gleichmäßig verteilt sind, wobei die verformbare Membran (104, 208) zwischen einem Hohlraum (111, 210) und dem elastomeren Material (114) angeordnet ist.

2. Triaxialer Kraftsensor (100) nach Anspruch 1, wobei die Haftmittel mindestens eine Kleberschicht (112) aufweisen, die dazu bestimmt ist, zwischen der einen der Hauptflächen der verformbaren Membran (104) und dem elastomeren Material (114) angeordnet zu werden.

3. Triaxialer Kraftsensor (200) nach Anspruch 1, wobei die Haftmittel mehrere Verankerungszapfen (292) aufweisen, die dazu bestimmt sind, zwischen der einen der Hauptflächen der verformbaren Membran (208) und dem elastomeren Material (114) angeordnet zu werden.

4. Triaxialer Kraftsensor (200) nach Anspruch 3, wobei jeder Verankerungszapfen (212) in einer Ebene, die zu der durch die eine der Hauptflächen der verformbaren Membran (208) verlaufenden Ebene parallel ist, einen Querschnitt mit Abmessungen zwischen etwa 100 nm und 10 µm aufweist, und/oder wobei ein Zwischenraum zwischen zwei benachbarten Verankerungszapfen (212) zwischen etwa 100 nm und 10 µm beträgt.

5. Triaxialer Kraftsensor (200) nach einem der Ansprüche 3 und 4, wobei die Verankerungszapfen (212) auf SiN und/oder SiO₂ und/oder polykristallinem Silicium basieren.

6. Triaxialer Kraftsensor (200) nach einem der Ansprüche 3 bis 5, wobei jeder Verankerungszapfen (212) einen Fuß (223, 232), der von einem ersten Materialabschnitt gebildet wird, und einen oberen Teil (225, 234), der von einem zweiten Materialabschnitt gebildet wird, aufweist, wobei der Fuß (223, 232) zwischen der einen der Hauptflächen der Membran (208) und dem oberen Teil (225, 234) angeordnet ist und in einer Ebene, die zu einer durch die eine der Hauptflächen der Membran (208) verlaufenden Ebene parallel ist, einen Querschnitt mit Abmessungen aufweist, die kleiner sind als diejenigen eines Querschnitts des oberen Teils (225, 234) in einer Ebene, die zu der durch die eine der Hauptflächen der Membran (208) verlaufenden Ebene parallel ist.

7. Triaxialer Kraftsensor (100, 200) nach einem der vorhergehenden Ansprüche, wobei die Mittel zur Detektion einer Verformung der Membran (104, 208) mehrere Dehnungsmessstreifen (106) aufweisen, die elektrisch miteinander verbunden sind und dabei zwei Wheatstone-Brücken bilden.

8. Triaxialer Kraftsensor (200) nach einem der Ansprüche 1 bis 6, wobei die Mittel zur Detektion einer Verformung der Membran mindestens drei erste kapazitive Detektionselektroden (214a, 214b, 214c), die an der einen der Hauptflächen der Membran (208) angeordnet sind, und mindestens eine zweite kapazitive Detektionselektrode (216, 216a, 216b, 216c), die mit einem nicht verformbaren Teil des Sensors (200) fest verbunden und gegenüber der verformbaren Membran (208) angeordnet ist, aufweist.

9. Triaxialer Kraftsensor (100, 200) nach einem der vorhergehenden Ansprüche, wobei die verformbare Membran (104, 208) einen Abschnitt eines Substrats (102) auf Halbleiterbasis oder einen Abschnitt einer aktiven Schicht (206) eines Substrats aufweist, der oberhalb des in einer dielektrischen Teilschicht (204) des Substrats ausgebildeten Hohlraums (111, 210) angeordnet ist.

10. Triaxialer Kraftsensor (100, 200) nach einem der vorhergehenden Ansprüche, welcher außerdem eine elektrisch isolierende Schicht (110) aufweist, die zwischen der verformbaren Membran (104, 208) und den Haftmitteln (112, 212) angeordnet ist.

11. Triaxialer Kraftsensor (100, 200) nach einem der vorhergehenden Ansprüche, welcher außerdem Mittel zur Verarbeitung von Informationen, die von den Mitteln zur Detektion (106, 214, 216) einer Verformung der Membran (104, 208) stammen, aufweist, die geeignet sind, ausgehend von den Informationen, die von den Mitteln zur Detektion (106, 214, 216) stammen, die Richtung und die Stärke der zu detektierenden Kraft zu bestimmen.

12. Verfahren zur Herstellung eines triaxialen Kraftsensors (100, 200), welches mindestens die folgenden Schritte aufweist:
- Herstellung einer verformbaren Membran (104, 208),
- Herstellung von Mitteln zur Detektion (106, 214, 216) einer Verformung der Membran (104, 208), die geeignet sind, eine triaxiale Detektion der zu detektierenden Kraft auf einer der Hauptflächen der verformbaren Membran (104, 208) durchzuführen,
- Herstellung von Haftmitteln (112, 212) auf mindestens der einen der Hauptflächen der verformbaren Membran (104, 208), die auf der gesamten Oberfläche der einen der Hauptflächen der verformbaren Membran (104, 208) gleichmäßig verteilt sind,
wobei die Haftmittel (112, 212) geeignet sind, die eine der Hauptflächen der verformbaren Membran (104, 208) mit mindestens einem elastomeren Material (114), das dazu bestimmt ist, durch die zu detektierende Kraft beansprucht zu werden, fest zu verbinden, und wobei die verformbare Membran (104, 208) zwischen einem Hohlraum (111, 210) und dem elastomeren Material (114) angeordnet ist.

13. Verfahren zur Herstellung eines triaxialen Kraftsensors (100) nach Anspruch 12, wobei die Herstellung der verformbaren Membran (104) einen Schritt des Bearbeitens eines Abschnitts eines Substrats (102) auf Halbleiterbasis aufweist, der auch den Hohlraum (111) bildet.

14. Verfahren zur Herstellung eines triaxialen Kraftsensors (200) nach Anspruch 12, wobei die Herstellung der verformbaren Membran (208) einen Schritt der Herstellung mindestens einer Öffnung (211) durch mindestens eine aktive Schicht (206) eines Substrats hindurch und einen Schritt des Ätzens eines Abschnitts einer dielektrischen Teilschicht (204) des Substrats durch die Öffnung (211) hindurch, durch den der Hohlraum (210) gebildet wird, oberhalb dessen ein Abschnitt der aktiven Schicht (206) die verformbare Membran (208) bildet, aufweist.

15. Verfahren zur Herstellung eines triaxialen Kraftsensors (100, 200) nach einem der Ansprüche 12 bis 14, wobei die Herstellung der Mittel zur Detektion einer Verformung der Membran (104, 208) einen Schritt der Implantation von Dotierungssubstanzen in die Membran (104, 208) aufweist, durch den in der verformbaren Membran (104, 208) mehrere Dehnungsmessstreifen (106) gebildet werden, die elektrisch miteinander verbunden sind und dabei zwei Wheatstone-Brücken bilden.

16. Verfahren zur Herstellung eines triaxialen Kraftsensors (200) nach einem der Ansprüche 12 bis 14, wobei die Herstellung der Mittel zur Detektion einer Verformung der Membran (208) einen Schritt der Herstellung von mindestens drei ersten kapazitiven Detektionselektroden (214a, 214b, 214c) an der einen der Hauptflächen der Membran (208) und einen Schritt der Herstellung mindestens einer zweiten kapazitiven Detektionselektrode (216, 216a, 216b, 216c), die mit einem nicht verformbaren Teil des Sensors (200) fest verbunden ist, gegenüber der verformbaren Membran (208) aufweist.

17. Verfahren zur Herstellung eines triaxialen Kraftsensors (100) nach einem der Ansprüche 12 bis 16, wobei die Herstellung der Haftmittel mindestens einen Schritt des Aufbringens einer Kleberschicht (112) auf die eine der Hauptflächen der verformbaren Membran (104) aufweist.

18. Verfahren zur Herstellung eines triaxialen Kraftsensors (200) nach einem der Ansprüche 12 bis 16, wobei die Herstellung der Haftmittel mindestens die Herstellung mehrerer Verankerungszapfen (212) beinhaltet.

19. Verfahren zur Herstellung eines triaxialen Kraftsensors (200) nach Anspruch 18, wobei die Herstellung der Verankerungszapfen (212) durch die Durchführung der folgenden Schritte bewirkt wird:
- Aufbringen einer ersten Schicht (222) auf die eine der Hauptflächen der verformbaren Membran (208) und einer zweiten Schicht (224) auf die erste Schicht (222), wobei die erste und die zweite Schicht (222, 224) jeweils auf einem Material basieren, das selektiv bezüglich des jeweils anderen Materials geätzt werden kann,
- Ätzen der zweiten Schicht (224), derart, dass Abschnitte (225) der zweiten Schicht (224) verbleiben, welche obere Teile der Verankerungszapfen (212) bilden,
- Ätzen der ersten Schicht (222) während einer Dauer, die länger als diejenige des vorhergehenden Schrittes des Ätzens der zweiten Schicht (224) ist, derart, dass unter den verbleibenden Abschnitten (225) der zweiten Schicht (224) Abschnitte (223) der ersten Schicht (222) verbleiben, welche jeweils einen Fuß eines Verankerungszapfens (212) bilden.

20. Verfahren zur Herstellung eines triaxialen Kraftsensors (200) nach Anspruch 18, wobei die Herstellung der Verankerungszapfen (212) durch die Durchführung der folgenden Schritte bewirkt wird:
- Aufbringen einer Opferschicht (228) auf die eine der Hauptflächen der verformbaren Membran (208),
- Ätzen mehrerer Löcher (230) in die Opferschicht (228),
- Aufbringen eines Verankerungsmaterials (212) in die Löcher (230) und auf die Opferschicht (228) um die Löcher (230) herum, welches die Verankerungszapfen (212) bildet,
- Entfernen der Opferschicht (228).

21. Verfahren zur Herstellung eines triaxialen Kraftsensors (100, 200) nach einem der Ansprüche 12 bis 20, welches außerdem, zwischen dem Schritt der Herstellung der Mittel zur Detektion (106, 214, 216) einer Verformung der Membran (104, 208) und dem Schritt der Herstellung der Haftmittel (112, 212), mindestens einen Schritt des Aufbringens einer elektrisch isolierenden Schicht (110), welche mindestens einen Teil der Mittel zur Detektion (106, 214) einer Verformung der Membran (104, 208) bedeckt, auf die eine der Hauptflächen der verformbaren Membran (104, 208) aufweist, wobei die Haftmittel (112, 212) anschließen auf der elektrisch isolierenden Schicht (110) hergestellt werden.
